# EUROPEAN PATENT APPLICATION

(11) **EP 2 950 291 A1**
(43) Date of publication of application: **02.12.2015**
(21) Application number: 13873098.1
(22) Date of filing: 25.01.2013
(51) Int. Cl.: G08G 1/09, B60R 1/00, G06T 7/00

(54) **ROAD ENVIRONMENT RECOGNITION SYSTEM**

(71) Applicant: TOYOTA JIDOSHA KABUSHIKI KAISHA, Toyota-shi, Aichi-ken, 471-8571 (JP)
(72) Inventor: KASHIWAI, Tadahiro, Toyota-shi Aichi 471-8571 (JP)
(74) Representative: D Young & Co LLP
(86) International application number: PCT/JP2013/051663
(87) International publication number: WO 2014/115319

(57) **Abstract**

A road environment recognition system includes an imaging device 21 configured to capture a view in a traveling direction of a vehicle, and an electronic control unit 1. The electronic control unit 1 includes: an image processing region calculation unit configured to set a predetermined region from an image captured by the imaging device 21 as an image processing region, the predetermined region including a central part and at least a part of a characteristic object present on a road, if any, in a traveling direction of the vehicle, and to decrease the image processing region, as the vehicle approaches the characteristic object; and a characteristic object detection unit configured to detect the characteristic object based on image information of the image processing region. For example, the image processing region calculation unit sets a region, which has a predetermined angle with the central part being defined as a center, as an image processing region.

## Description

### Field

The present invention relates to a road environment recognition system configured to detect a characteristic object on a road, based on captured image information in a traveling direction of the vehicle. Background

Conventionally, this type of road environment recognition system has been known. For example, Patent Literature 1 described below discloses a technique in which a position of a traffic indicator (a characteristic object on a road) is estimated based on the position of the vehicle and road map information of a map database, a rectangular image processing region in image data of a view ahead of the vehicle is determined based on the position information and the image data, and the traffic indicator is detected in the image processing region. Patent Literature 2 described below discloses a technique of recognizing a sign of character strings (a characteristic object on a road) displayed on a side wall at the side of a road. With this technique, in the case where a sign of character strings is limited, the sign of character strings is recognized with template matching, starting with the characters closest to the vehicle, by using only a template corresponding to the sign of character strings. In the technique described in Patent Literature 2, the region including the character strings is an image processing region to which template matching is to be performed. However, to recognize a sign of character strings written on a road, an image processing region is specified as a triangle which is wide in the near side and which has a vertex right in front of a camera on a line indicating a horizon line. Patent Literature 3 described below discloses a technique of recognizing a road sign part from a captured image as a rectangular image processing region, and of recognizing a road sign (a characteristic object on a road) with a matching between the road sign part and template data of road signs. With this technique, the template size is changed in a stepwise manner according to a distance between the vehicle and the road sign, and a process of recognizing the road sign with the template matching is performed in a stepwise manner according to the distance.

### Citation List

### Patent Literature

Patent Literature 1: Japanese Laid-open Patent Publication No. 2007-241469
Patent Literature 2: Japanese Laid-open Patent Publication No. 2007-200005
Patent Literature 3: Japanese Laid-open Patent Publication No. 2006-003994

### Summary

### Technical Problem

In the technique in Patent Literature 1, when a deviation is generated in the information on the position of the vehicle, an image of a characteristic object might not be included in the determined image processing region, and therefore, the characteristic object might not be able to be recognized. Especially, this technique uses a rectangular image processing region from which a part of image data has been extracted. Therefore, if the position of the vehicle in the traveling direction deviates, it is highly possible that an image of a characteristic object is not included in the determined image processing region. Accordingly, the technique in Patent Literature 1 needs to enlarge the image processing region. However, enlarging the image processing region increases a load on a computing process upon the recognition of a characteristic object, which is not preferable. In the techniques in Patent Literatures 2 and 3, a characteristic object is detected in captured image information before the template matching. Therefore, a load on a computing process upon the detection is high, which is not preferable.

In view of this, the present invention aims to solve the problems of the background arts, and to provide a road environment recognition system that can enhance precision of recognizing a characteristic object on a road and can reduce a load on a computing process.

### Solution to Problem

To achieve the object, the present invention includes: an imaging device configured to capture a view in a traveling direction of a vehicle; an image processing region calculation unit configured to set a predetermined region in an image captured by the imaging device as an image processing region, the predetermined region including a central part and at least a part of a characteristic object present on a road, if any, in a traveling direction of the vehicle, and to decrease the image processing region as the vehicle approaches the characteristic object; and a characteristic object detection unit configured to detect the characteristic object based on image information of the image processing region.

It is preferable that the image processing region calculation unit is configured to set a region, which has a predetermined angle with the central part being defined as a center, as the image processing region.

Moreover, it is preferable that the image processing region calculation unit is configured to change the image processing region from at least a rectangular region to a region having a predetermined angle with the central part being defined as a center, as the vehicle approaches the characteristic object.

Moreover, it is preferable that the image processing region calculation unit is configured to exclude a region closer to the central part than the characteristic object in the image processing region from at least the image processing region, as the vehicle approaches the characteristic object.

Moreover, it is preferable that the image processing region calculation unit is configured to decrease the predetermined angle of the image processing region, as the vehicle approaches the characteristic object.

Moreover, it is preferable that the image processing region calculation unit is configured to decrease the predetermined angle of the image processing region, as the vehicle approaches the characteristic object, in such a manner that a line linking the position of the characteristic object relative to the current position of the vehicle to the position of the characteristic object relative to the vehicle approaching the characteristic object is included in the image processing region.

Moreover, it is preferable that the image processing region calculation unit is configured to change the line linking the characteristic objects according to a traveling lane of the vehicle and/or a traveling posture of the vehicle.

Moreover, it is preferable that the image processing region calculation unit is configured to calculate the image processing region such that a characteristic point of the characteristic object is located on a synthetic vector of two vectors with the center of the predetermined angle being defined as a starting point.

Moreover, it is preferable that the image processing region calculation unit is configured to change the synthetic vector according to a traveling lane of the vehicle and/or a traveling posture of the vehicle. Advantageous Effects of Invention

A road environment recognition system according to the present invention decreases an image processing region to reduce information quantity of an image necessary for an image processing, as the vehicle approaches a characteristic object. Accordingly, the road environment recognition system can recognize the characteristic object, while reducing a load on a computing process, without deteriorating recognition precision. In addition, the road environment recognition system temporarily sets the image processing region slightly wider, and then, decreases the image processing region one or more steps smaller. Accordingly, the recognition of the characteristic object with high precision as described above is possible, even if the detected vehicle position greatly deviates in the traveling direction relative to the characteristic object. When a relative distance between the vehicle and the characteristic object in the traveling direction is long, the road environment recognition system obtains relative distances in the horizontal direction and the height direction between them by using the wide image processing region. Thereafter, as the vehicle approaches the characteristic object, the road environment recognition system narrows down the image processing region to obtain the relative distances in the horizontal direction and the height direction. Accordingly, even if the positions of the characteristic object in the horizontal direction and in the height direction are not stored in the map information database, the road environment recognition system can recognize the characteristic object, while reducing a load on a computing process, without deteriorating recognition precision. In addition, the road environment recognition system sets the image processing region into a sectoral shape having a predetermined angle. With this configuration, even if the detected vehicle position greatly deviates in the traveling direction relative to the characteristic object, the image processing region can keep including the characteristic point of the characteristic object. Thus, the precision of recognizing the characteristic object can be enhanced.

### Brief Description of Drawings

FIG. 1 is a block diagram illustrating a configuration of a road environment recognition system according to the present invention.
FIG. 2 is a view illustrating an example of a sectoral image processing region that is set slightly wider when a characteristic object is present above a road.
FIG. 3 is a view illustrating an example of a sectoral image processing region when a characteristic object is present above a road, the image processing region being narrowed down as the vehicle travels.
FIG. 4 is a view illustrating an example of a sectoral image processing region that is set slightly wider when a characteristic object is present on a left side of a road.
FIG. 5 is a view illustrating an example of a sectoral image processing region when a characteristic object is present on a left side of a road, the image processing region being narrowed down as the vehicle travels.
FIG. 6 is a view illustrating an example of a sectoral image processing region that is set slightly wider when a characteristic object is present on a right side of a road.
FIG. 7 is a view illustrating an example of a sectoral image processing region when a characteristic object is present on a right side of a road, the image processing region being narrowed down as the vehicle travels.
FIG. 8 is a diagram for describing a shifting direction of a characteristic point for each lane.
FIG. 9 is a diagram for describing a difference in the shifting direction of a characteristic point depending on whether the vehicle performs a pitch motion or not.
FIG. 10 is a diagram for describing a difference in the shifting direction of a characteristic point depending on whether the vehicle performs a yaw motion or not.
FIG. 11 is a flowchart for describing a computing process operation of the road environment recognition system according to the present invention.
FIG. 12 is a diagram for describing a shifting direction of a characteristic point in an image processing region.
FIG. 13 is a diagram for describing another example of an image processing region which is narrowed down as the vehicle travels.
FIG. 14 is a view illustrating an example of a rectangular image processing region that is set slightly wider when a characteristic object is present above a road.
FIG. 15 is a view illustrating an example of a rectangular image processing region that is set slightly wider when a characteristic object is present on a left side of a road.
FIG. 16 is a view illustrating an example of a rectangular image processing region that is set slightly wider when a characteristic object is present on a right side of a road.

### Description of Embodiment

An embodiment of a road environment recognition system according to the present invention will be described in detail below, with reference to the drawings. Note that the present invention is not limited by the embodiment.

### [Embodiment]

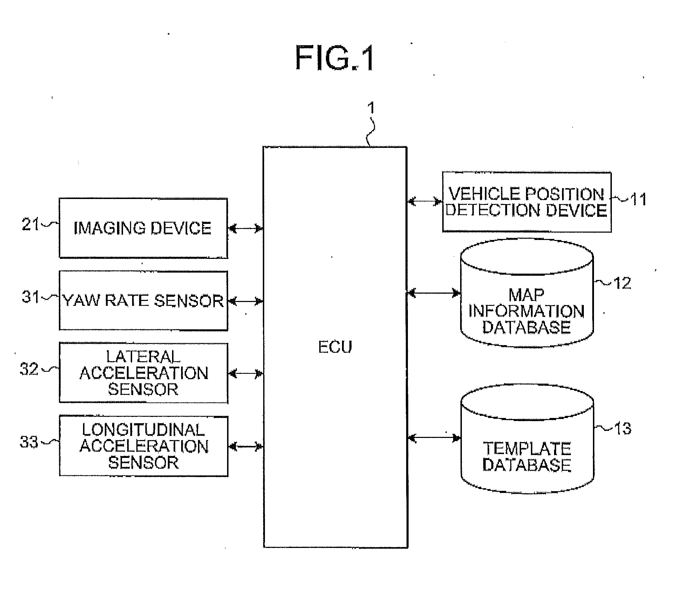

An embodiment of a road environment recognition system according to the present invention will be described with reference to FIGS. 1 to 12.

First, the configuration of the road environment recognition system will be described.

The road environment recognition system is mounted on a vehicle to recognize a characteristic object on a road, based on captured image information in a traveling direction of the vehicle. Therefore, the road environment recognition system is provided with an electronic control unit (ECU) 1 that performs the computing process.

The road environment recognition system also includes a vehicle position detection device 11 and map information database 12. The vehicle position detection device 11 is a device for detecting the present position of the vehicle. A so-called GPS (Global Positioning System) can be used as the vehicle position detection device 11. The vehicle position information is transmitted to the electronic control unit 1. The map information database 12 stores at least map information of a road which allows vehicle traffic, and characteristic object information involved with a characteristic object (e.g., a traffic sign and a signpost) on a road. The map information includes information of a number of lanes (lane information) as well as information of a road shape, such as a straight road, a circular road, or a slope road. If the road is a circular road, the map information also includes information of the curvature radius of this road. If the road is a slope road, the map information includes information of the inclination of this road. The map information database 12 stores at least type information and position information of a characteristic object, as characteristic object information. The position information of the characteristic object includes, for example, position information of the characteristic object relative to the traveling direction on the road and position information of the characteristic object relative to the width direction of the road. The position information relative to the traveling direction means position information of the characteristic object based on latitude and longitude, and position information of the characteristic object based on a distance mark (so-called kilometer post), for example.
As for the position information relative to the width direction, the information, by which the road environment recognition system can recognize whether the position of the characteristic object relative to the road is above a road, or at a left side or a right side of the road viewed in the traveling direction, is at least stored.

The road environment recognition system also includes an imaging device 21 that captures a view in the traveling direction of the vehicle. The imaging device 21 illustrated in the present embodiment captures a view ahead of the vehicle. An imaging region of the imaging device 21 illustrated in the present embodiment is a rectangle. Information of an image captured by the imaging device 21 is transmitted to the electronic control unit 1.

The road environment recognition system searches characteristic points of a characteristic object from a captured image with template matching using local characteristic points such as SIFT or SURF. To this end, the road environment recognition system includes a template database 13 storing various templates used for the template matching. Each of the templates is prepared as a vector (so-called characteristic vector) indicating a local characteristic of a characteristic object, for example. A characteristic point for each type of characteristic objects, such as a characteristic point on an outer shape of a characteristic object or a characteristic point written on a characteristic object such as characters or designs, are considered as characteristic points of the characteristic object. Various templates which are possibly used for the template matching are stored in the template database 13. In this case, each template may be stored for each type of characteristic objects in association with type information of a characteristic object. Specifically, a certain characteristic object and a template for the recognition of this characteristic object are stored beforehand in the template database 13 in association with each other. When the presence of this characteristic object is recognized in later-described step ST2, the template corresponding to the characteristic object may be read from the template database 13.

When all pieces of image information captured by the imaging device 21 are specified as the subject to which the template matching is to be performed, image information quantity is huge, which increases a load on the computing process therefor. This might cause a trouble such as a delay in recognizing a characteristic object. In view of this, the road environment recognition system narrows down image information to which the template matching is to be performed. The electronic control unit 1 includes an image processing region calculation unit for obtaining an image processing region that becomes the subject to which the template matching is to be performed.

The image processing region is a part of image information captured by the imaging device 21, and it includes at least a part of a characteristic object. The part of the characteristic object is set such that it includes a characteristic point. In this case, the characteristic object on the image captured by the imaging device 21 is present closer to the central part or around the central part of the captured image as the characteristic object is captured from a larger distance, wherever the position of the characteristic object relative to the width direction of the road is. Specifically, a characteristic object captured at the farthest distance at which the capture of the characteristic object is possible (hereinafter referred to as "maximum distance capable of capturing an image") is present at or around the central part of the captured image. Accordingly, the image processing region calculation unit is configured to calculate a predetermined region, which includes the central part and at least a part of the characteristic object, in the image captured by the imaging device 21, as an image processing region. Note that the maximum distance capable of capturing an image is a distance on a flat and straight road having no obstacle in the traveling direction.

The characteristic object in the captured image moves away from the central part or the vicinity of the central part toward the outside of the image as the vehicle approaches the characteristic object, according to the position of the characteristic object relative to the width direction of the road. For example, when the position of the characteristic object relative to the width direction of the road is above the road, the characteristic object in the captured image is shifted upward from the central part or the vicinity of the central part in the captured image, as the vehicle approaches the characteristic object. When the position of the characteristic object relative to the width direction of the road is on the left side of the road, the characteristic object in the captured image is shifted in the left obliquely-upward direction from the central part or the vicinity of the central part in the captured image, as the vehicle approaches the characteristic object. When the position of the characteristic object relative to the width direction of the road is on the right side of the road, the characteristic object in the captured image is shifted in the right obliquely-upward direction from the central part or the vicinity of the central part in the captured image, as the vehicle approaches the characteristic object. In view of this, the image processing region calculation unit changes the image processing region in accordance with the shift of the characteristic object (specifically, the characteristic point) in the captured image. In this case, the image processing region calculation unit sets the changed image processing region to be smaller than the image processing region having the characteristic object on or around its central part. Specifically, the image processing region calculation unit is configured to decrease the image processing region, as the vehicle approaches the characteristic object. When a characteristic object is captured for the first time at the maximum distance capable of capturing an image, it can be estimated that the characteristic object is present on or around the central part of the captured image. However, the specific position of the characteristic object is not clearly recognized. Therefore, the image processing region needs to be set wider than the image processing region after the specific position is recognized.

The image processing region calculation unit determines an image processing region such that it can follow the characteristic object until the imaging device 21 can no more capture the characteristic object because of an approach of the vehicle. In view of this, the image processing region calculation unit in the present embodiment determines an image processing region from at least the following three patterns, based on the position of a characteristic object relative to the width direction of a road.

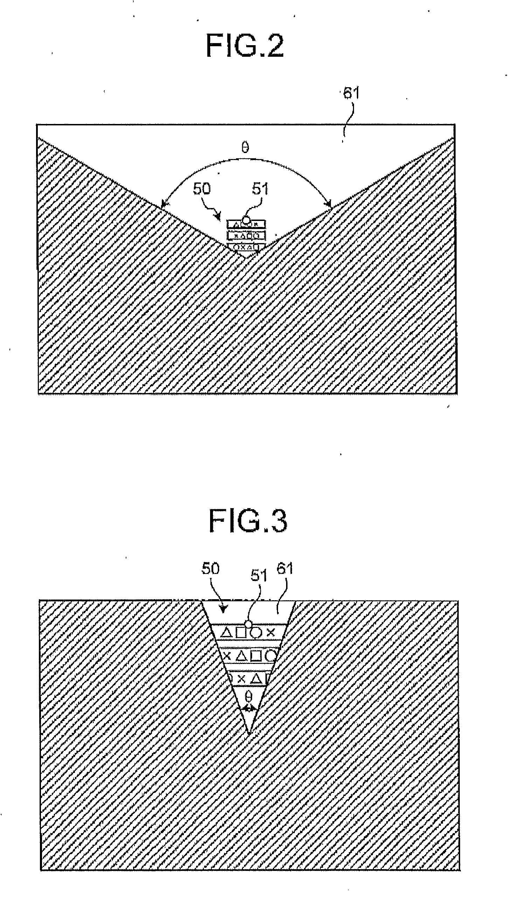

Specifically, when the position of the characteristic object relative to the width direction of the road is above the road, the characteristic object (characteristic point of the characteristic object) is shifted upward from the central part or the vicinity of the central part in the captured image as described above. Therefore, in this case, the image processing region calculation unit determines, as the image processing region, a region having a predetermined angle θ of two vectors which have a center located at the central part of the captured image and whose synthetic vector corresponds to the shifting direction of the characteristic point. The image processing region calculation unit estimates that a characteristic point 51 is shifted upward in the captured image at the maximum distance capable of capturing an image of a characteristic object 50, and obtains an image processing region 61 based on the estimation result of the shifting direction of the characteristic point 51 (FIG. 2). The image processing region calculation unit decreases the predetermined angle θ in a stepwise manner to narrow the image processing region 61, as the vehicle approaches the characteristic object 50 (FIG. 3). In this case, the image processing region 61 is narrowed such that its area is reduced at least one step smaller. Note that, in this illustrative example, the upper central part of the characteristic object 50 is the characteristic point 51.

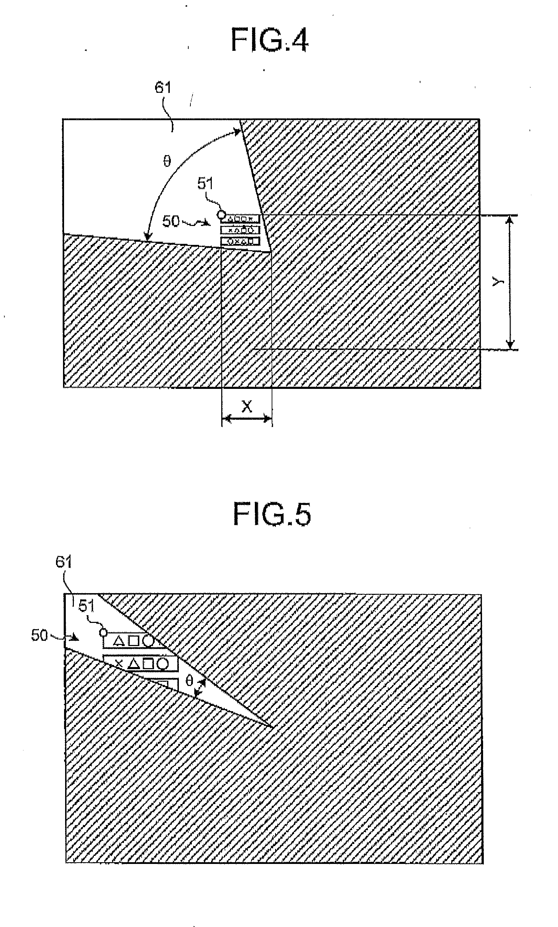

When the position of the characteristic object relative to the width direction of the road is on the left side of the road, the characteristic object (characteristic point of the characteristic object) is shifted in the left obliquely-upward direction from the central part or the vicinity of the central part in the captured image, as described above. Therefore, in this case, the image processing region calculation unit determines, as the image processing region, a region having a predetermined angle θ of two vectors which have a center located at the central part of the captured image and whose synthetic vector corresponds to the shifting direction of the characteristic point. The image processing region calculation unit estimates that a characteristic point 51 is shifted in the left obliquely-upward direction in the captured image at the maximum distance capable of capturing an image of a characteristic object 50, and obtains an image processing region 61 based on the estimation result of the shifting direction of the characteristic point 51 (FIG. 4). The image processing region calculation unit decreases the predetermined angle θ in a stepwise manner to narrow the image processing region 61, as the vehicle approaches the characteristic object 50 (FIG. 5). In this case, the image processing region 61 is narrowed such that its area is reduced at least one step smaller. Note that, in this illustrative example, the upper left corner of the characteristic object 50 is the characteristic point 51.

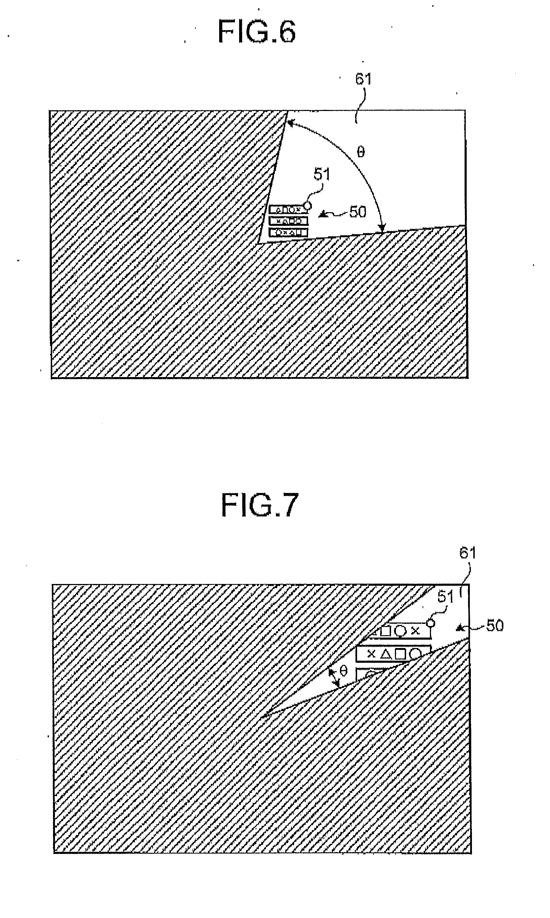

When the position of the characteristic object relative to the width direction of the road is on the right side of the road, the characteristic object (characteristic point of the characteristic object) is shifted in the right obliquely-upward direction from the central part or the vicinity of the central part in the captured image, as described above. Therefore, in this case, the image processing region calculation unit determines, as the image processing region, a region having a predetermined angle θ of two vectors which have a center located at the central part of the captured image and whose synthetic vector corresponds to the shifting direction of the characteristic point. The image processing region calculation unit estimates that a characteristic point 51 is shifted in the right obliquely-upward direction in the captured image at the maximum distance capable of capturing an image of a characteristic object 50, and obtains an image processing region 61 based on the estimation result of the shifting direction of the characteristic point 51 (FIG. 6). The image processing region calculation unit decreases the predetermined angle θ in a stepwise manner to narrow the image processing region 61, as the vehicle approaches the characteristic object 50 (FIG. 7). In this case, the image processing region 61 is narrowed such that its area is reduced at least one step smaller. Note that, in this illustrative example, the upper right corner of the characteristic object 50 is the characteristic point 51.

In the case where the image processing region calculation unit finds that the estimated shifting direction (synthetic vector) of the characteristic point 51 has deviated with the traveling of the vehicle, it may correct the image processing region 61 to include the right shifting direction (synthetic vector) of the characteristic point 51. Specifically, the image processing region calculation unit decreases the predetermined angle θ of the image processing region 61 in a stepwise manner, as the vehicle approaches the characteristic object 50, in such a manner that the line linking the position of the characteristic object 50 (the characteristic point 51 of the characteristic object 50) relative to the current position of the vehicle to the position of the characteristic object 50 (the characteristic point 51 of the characteristic object 50) relative to the vehicle approaching the characteristic object 50 is included in the image processing region 61. In this case, the image processing region 61 is narrowed such that its area is reduced at least one step smaller.

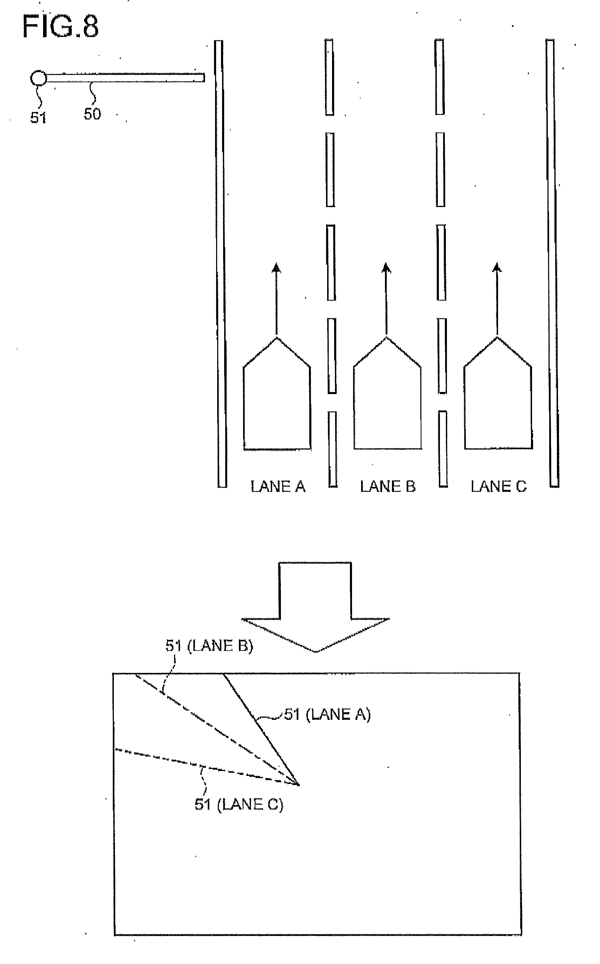

The shifting direction (the synthetic vector, the line linking the characteristic points 51) of the characteristic point 51 in the captured image is changed depending on which position of the road in the width direction the vehicle travels. For example, when the road includes a plurality of lanes, the position of the characteristic point 51 in the captured image is different for each lane. Therefore, the shifting direction of the characteristic point 51 is different for each lane. In view of this, the image processing region calculation unit may change the shifting direction of the characteristic point 51 according to the lane on which the vehicle travels. However, the change is only possible when the position of the characteristic object 50 (characteristic point 51) in the horizontal direction and the position in the height direction are stored in the map information database 12 as characteristic object information. The position in the horizontal direction is the position in the width direction of the road, and it is the position measured from the central part of the lane, on which the vehicle travels, in the width direction of the road, for example. The position in the height direction is the position in the vertical direction measured from the road surface or from the place with the same height as the road surface. FIG. 8 illustrates the shifting direction of the characteristic point 51 for each lane while the vehicle travels on the road with three lanes A, B, and C. A solid line in the lower diagram indicates the shifting direction of the characteristic point 51 while the vehicle travels on the lane A. A dot-and-dash line indicates the shifting direction of the characteristic point 51 while the vehicle travels on the lane B. A two-dot chain line indicates the shifting direction of the characteristic point 51 while the vehicle travels on the lane C. In the shifting direction of the characteristic point 51, the change in the height direction is smaller, as the vehicle travels on the lane away from the characteristic object 50. To calculate the shifting direction of the characteristic point 51 according to the traveling position of the vehicle in the width direction of the road, the traveling lane on which the vehicle travels may be recognized out of the plurality of lanes on the road. The lane on which the vehicle travels may be recognized based on the image captured by the imaging device 21. If the vehicle position detection device 11 is highly precise to be capable of distinguishing each lane, the lane on which the vehicle travels may be recognized based on the vehicle position information. Note that the shifting direction of the characteristic point 51 according to the traveling position of the vehicle in the width direction of the road can be recognized by monitoring the characteristic point 51 with the traveling of the vehicle. Therefore, it is not always necessary to recognize the lane on which the vehicle travels when calculating the shifting direction.

The description so far relates to the situation in which the vehicle travels on a flat and straight road with a constant speed. However, on a circular road or a slope road, the vehicle performs a yaw motion, a rolling motion, or a pitch motion Accordingly, the shifting direction (the synthetic vector, the line linking the characteristic points 51) of the characteristic point 51 in the captured image is different from the shifting direction on a flat road or a straight road. Therefore, when the vehicle performs a yaw motion, a rolling motion, or a pitch motion, a deviation occurs in the estimation result of the shifting direction of the characteristic point 51 before the shifting direction is recognized from the captured image. As a result, the actual shifting direction of the characteristic point 51 might not be included in the calculated image processing region 61. In view of this, the image processing region calculation unit is configured to calibrate an optical axis of the imaging device 21 according to the traveling posture of the vehicle to calculate the image processing region 61 including the shifting direction of the characteristic point 51 even if the vehicle performs a yaw motion, for example. For example, the image processing region calculation unit estimates the traveling posture of the vehicle during a yaw motion based on the detection result from a yaw rate sensor 31, estimates the traveling posture of the vehicle during a rolling motion based on the detection result of a lateral acceleration sensor 32, and estimates the traveling posture of the vehicle during a pitch motion based on the detection result of a longitudinal acceleration sensor 33. Note that the image processing region calculation unit may estimate the traveling posture of the vehicle based on the change in a load of each wheel.

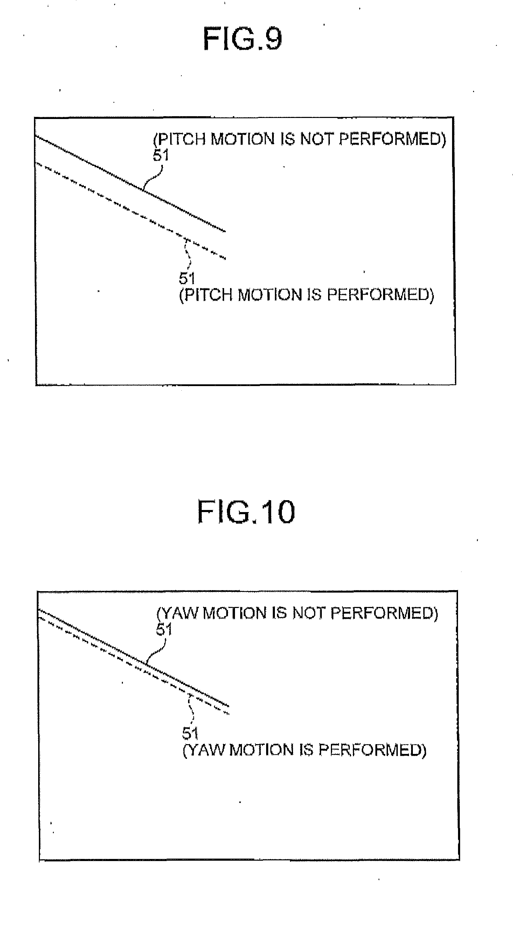

FIG. 9 is a diagram illustrating an example of a difference in the shifting direction of the characteristic point 51 depending on whether the vehicle performs a pitch motion or not. A solid line in this figure indicates the shifting direction of the characteristic point 51 followed with a pitch angle being defined as 0 degree (specifically, with the optical axis of the imaging device 21 being straight). A broken line indicates the shifting direction of the characteristic point 51 followed with the pitch angle (i.e., the optical axis of the imaging device 21) being inclined upward at an angle of 5 degrees. FIG. 10 is a diagram illustrating an example of a difference in the shifting direction of the characteristic point 51 depending on whether the vehicle performs a yaw motion or not. A solid line in this figure indicates the shifting direction of the characteristic point 51 followed in the state in which the vehicle does not perform a yaw motion (specifically, with the optical axis of the imaging device 21 being straight). A broken line indicates the shifting direction of the characteristic point 51 followed with the optical axis of the imaging device 21 being inclined at an angle of 5 degrees in the right yaw direction.

In other words, the image processing region calculation unit can be the unit that changes the shifting direction of the characteristic point 51 according to the traveling posture of the vehicle. Upon changing the direction, the image processing region calculation unit may also change the shifting direction of the characteristic point 51 according to the lane on which the vehicle travels. Specifically, the image processing region calculation unit is configured to change the shifting direction of the characteristic point 51 according to the lane on which the vehicle travels and/or the traveling posture of the vehicle.

The traveling posture of the vehicle and the optical axis direction of the imaging device 21 are changed also according to the number and position of occupants, an amount of loaded luggage, or a loading position of the luggage. For example, when a large amount of luggage is loaded on the back of the vehicle, the traveling posture of the vehicle (the optical axis direction of the imaging device 21) is changed in the pitch direction, compared to the case where a small amount of luggage is loaded. In addition, when occupants are aboard unevenly on either one of left and right sides of the vehicle, the traveling posture of the vehicle (the optical axis direction of the imaging device 21) is changed in the rolling direction, compared to the case where the occupants are aboard evenly on left and right sides. Such change is already recognized upon the start of the vehicle. Therefore, it is desirable to calibrate the optical axis direction of the imaging device 21, which has already been known, before the vehicle starts to travel, rather than to calibrate the optical axis direction of the imaging device 21 during traveling (especially during the calculation of the image processing region 61). The latter case might cause inability to recognize the characteristic object 50 or a recognition delay. Accordingly, the image processing region calculation unit is configured to execute calibration of a deviation in an optical axis direction of the imaging device 21 caused by a change in occupants or luggage, when opening/closing of a door is detected, or opening/closing of a trunk is detected. With this configuration, the road environment recognition system can prevent the inability to recognize the characteristic object 50 or the recognition delay.

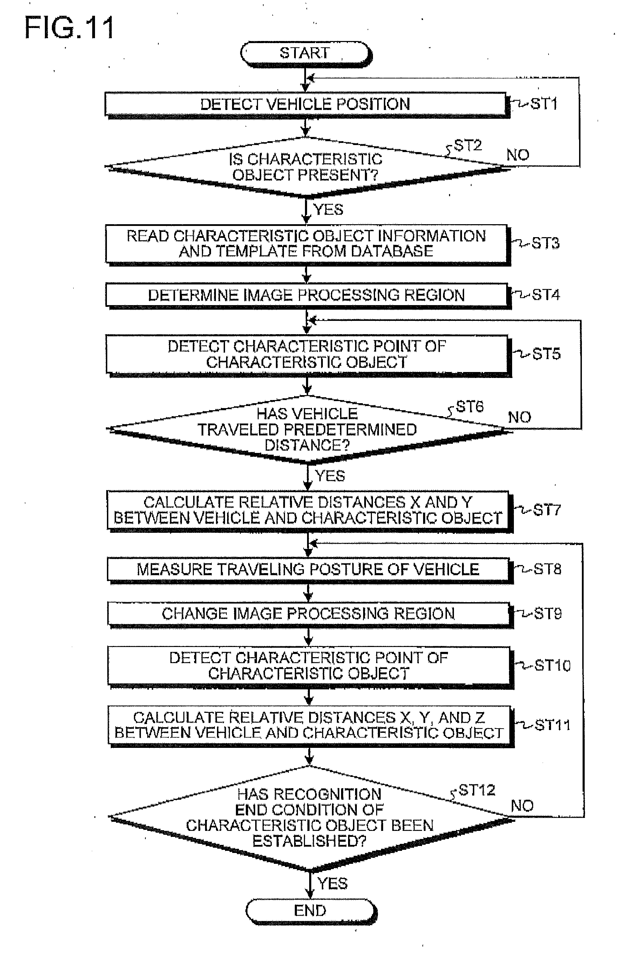

A computing process of the road environment recognition system will be described below with reference to the flowchart in FIG. 11.

A vehicle position detection unit of the electronic control unit 1 detects the current position of the vehicle on a road based on the vehicle position detection information received from the vehicle position detection device 11 and the map information from the map information database 12 (step ST1).

A characteristic object detection unit in the electronic control unit 1 determines whether or not a characteristic object 50 that becomes a subject to be recognized is present in the traveling direction of the vehicle (step ST2). This determination is made using the vehicle position information, the map information, the characteristic object information (the position information of the characteristic object 50 relative to the traveling direction on the road), and imaging region information of the imaging device 21. In this case, the characteristic object detection unit determines whether or not the characteristic object 50 is present within a predetermined distance in the traveling direction of the vehicle. If the characteristic object 50 is not present within the predetermined distance, the characteristic object detection unit determines that the characteristic object 50 to be recognized is not present in the traveling direction of the vehicle. If the characteristic object 50 is present within the predetermined distance, the characteristic object detection unit determines that the characteristic object 50 to be recognized is present in the traveling direction of the vehicle. The predetermined distance means a distance range within which a characteristic object can be captured by the imaging device 21. The predetermined distance includes the above-described maximum distance capable of capturing a characteristic object 50. When the road on which the vehicle is currently traveling or a road ahead of the current road is a circular road or a slope road, the imaging device 21 cannot always capture a characteristic object 50 present within the predetermined distance. However, the imaging device 21 can capture the characteristic object 50, when the vehicle keeps traveling, and moves from an uphill slope to a downhill slope where the characteristic object 50 is present, or moves from a circular road to a straight road where the characteristic object 50 is present. Therefore, when the characteristic object 50 is present within the predetermined distance, the characteristic object detection unit determines that the characteristic object 50 is present in the traveling direction of the vehicle, whether the imaging device 21 can actually capture the characteristic object 50 or not at present.

When the characteristic object 50 is determined not to be present, the electronic control unit 1 returns to step ST1 to repeat the same computing process.

On the other hand, when the characteristic object 50 is determined to be present, an image processing region calculation unit in the electronic control unit 1 reads characteristic object information (type information of the characteristic object 50 and position information of the characteristic object 50 relative to the width direction of the road) from the map information database 12, and reads a template suitable for the recognition of the characteristic object 50 from the template database 13 (step ST3). Specifically, in step ST3, an approximate position of the characteristic object 50 relative to the road (i.e., whether the characteristic object 50 is present above the road, or at the left or the right side of the road viewed in the traveling direction of the vehicle) is recognized from the position information of the characteristic object 50 relative to the width direction of the road, and a template is determined based on the type information of the characteristic object 50.

The image processing region calculation unit determines the image processing region 61 in the image captured by the imaging device 21 based on the position information of the characteristic object 50 relative to the width direction of the road in step ST3 (step ST4). The image processing region 61 is determined through the calculation as described above.

After the image processing region 61 is determined, a characteristic object detection unit in the electronic control unit 1 performs template matching using the template determined in step ST3 to the image information of the image processing region 61 so that a characteristic point 51 in the characteristic object 50 is detected in the image processing region 61 (step ST5).

The characteristic object detection unit determines whether or not the vehicle travels the predetermined distance from the point at which the characteristic point is first detected (step ST6). This determination is a preliminary determination for calculating respective relative distances X and Y in the horizontal direction and the height direction of the characteristic object 50 (the characteristic point 51) relative to the vehicle, and is for recognizing whether or not there is a shift of the characteristic point 51 by which the calculation can be performed. Therefore, the moving distance of the vehicle until the occurrence of the shift of the characteristic point 51 enabling the calculation of the relative distances X and Y may be set as the predetermined distance.

If the vehicle has not traveled the predetermined distance, the characteristic object detection unit determines that the information for performing the calculation of the relative distances X and Y is not yet obtained. Therefore, the characteristic object detection unit returns to step ST5 to repeat the detection of the characteristic point 51.

On the other hand, if the vehicle has traveled the predetermined distance, the characteristic object detection unit determines that there is a shift of the characteristic point 51 suitable for performing the calculation of the relative distances X and Y, and calculates the relative distances X and Y in the horizontal direction and in the height direction, respectively, of the characteristic object 50 (characteristic point 51) relative to the vehicle (step ST7).

Thereafter, the image processing region calculation unit measures the traveling posture of the vehicle, using the detection result of the yaw rate sensor 31, or the like (step ST8).

The image processing region calculation unit obtains the shifting direction of the characteristic point 51 based on the relative distances X and Y obtained in step ST7 and the traveling posture of the vehicle measured in step ST8. Based on the shifting direction, the image processing region calculation unit changes the image processing region 61 (step ST9). Here, the image processing region 61, which includes the shifting direction and is smaller than the region in step ST4, is determined.

After the image processing region 61 is narrowed down, the characteristic object detection unit performs template matching using the template determined in step ST3 to the image information of the newly determined image processing region 61 so that the characteristic point 51 in the characteristic object 50 is detected in the image processing region 61 (step ST10).

The characteristic object detection unit calculates the relative distances X and Y in the horizontal direction and in the height direction, respectively, of the characteristic object 50 (characteristic point 51) relative to the vehicle, and calculates a relative distance Z of the characteristic object 50 (characteristic point 51) from the vehicle in the traveling direction (step ST11). The relative distance Z in the traveling direction is calculated based on the image processing result of the image information in the image processing region 61, similar to the relative distances X and Y.

The image processing region calculation unit determines whether a recognition end condition of the characteristic object 50 is established or not (step ST12). This condition is applied for determining whether or not the vehicle is sufficiently close to the characteristic object 50 and recognizes the characteristic object 50. When the vehicle is very close to the characteristic object 50 so that it can recognize the characteristic object 50, the image processing region calculation unit determines that the recognition end condition is established. On the other hand, when the vehicle can recognize the characteristic object 50 by further approaching the characteristic object 50, the image processing region calculation unit determines that the recognition end condition is not established. Accordingly, when the characteristic point 51 is absent from the captured image, the image processing region calculation unit determines that the recognition end condition is established. When the characteristic point 51 is present on the captured image, the image processing region calculation unit determines that the recognition end condition is not established.

When the recognition end condition of the characteristic object 50 is not established, the image processing region calculation unit returns to step ST8 to measure the traveling posture of the vehicle. Then, the image processing region calculation unit proceeds to step ST9 to obtain the shifting direction of the characteristic point 51 based on the traveling posture and the relative distances X and Y obtained in step ST11, and to determines a smaller image processing region 61. If the image processing region 61 is too small to be narrowed down, the image processing region calculation unit proceeds to step ST10 with the current image processing region 61 being kept.

When the vehicle becomes very close to the characteristic object 50 and can recognize the characteristic object 50 as a consequence of the repeated processes described above, correct relative distances X, Y, and Z can be obtained in step ST11. In this case, it is determined in step ST12 that the recognition end condition of the characteristic object 50 is established. Therefore, this computing process is ended.

For example, the image processing region calculation unit determines the image processing region 61 in FIG. 4 in step ST4, and performs template matching to the image information of the image processing region 61 in step ST5 so that the characteristic point 51 of the characteristic object 50 is detected in the image processing region 61.

The characteristic object detection unit observes the motion of the characteristic point 51 which is changed as the vehicle travels, thereby calculating the relative distances X and Y in the horizontal direction and in the height direction, respectively, of the characteristic object 50 (characteristic point 51) relative to the vehicle in step ST7. Note that X and Y in FIG. 4 are conceptually illustrated for describing what the relative distance is, and they are different from the relative distances calculated here.

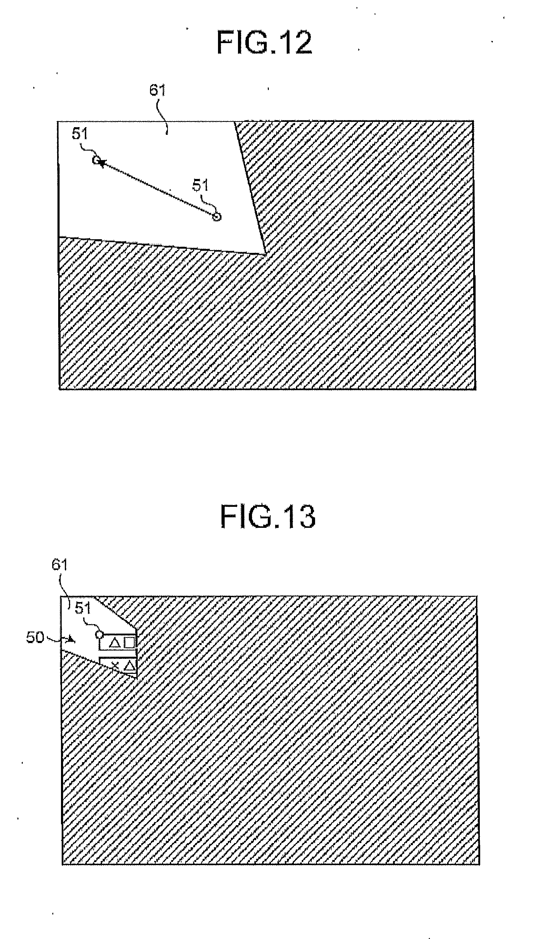

The image processing region calculation unit proceeds to step ST9 to obtain the shifting direction of the characteristic point 51 based on the relative distances X and Y and the traveling posture of the vehicle (FIG. 12). Based on the shifting direction, the image processing region calculation unit determines the image processing region 61 which includes the shifting direction and is smaller than the region in step ST4 (FIG. 5). The image processing region calculation unit proceeds to step ST10 to perform template matching to the image information of the newly determined image processing region 61 so that the characteristic point 51 of the characteristic object 50 is detected in the image processing region 61.

The characteristic object detection unit observes the motion of the characteristic point 51 which is changed as the vehicle travels, thereby calculating the relative distances X, Y, and Z of the characteristic object 50 (characteristic point 51) relative to the vehicle in step ST11.

The electronic control unit 1 repeats the computing process in step ST8 and the subsequent steps until the recognition end condition of the characteristic object 50 is established.

As described above, the road environment recognition system decreases the image processing region 61 to reduce information quantity of an image necessary for the image processing, as the vehicle approaches the characteristic object 50. Accordingly, the road environment recognition system can recognize the characteristic object 50, while reducing a load on a computing process, without deteriorating recognition precision. The road environment recognition system temporarily sets the image processing region 61 slightly wider, and then, decreases the image processing region 61 one or more steps smaller. Accordingly, the recognition of the characteristic object 50 with high precision described above becomes possible even if the detected vehicle position greatly deviates in the traveling direction relative to the characteristic object 50. When the relative distance Z between the vehicle and the characteristic object 50 is long, the road environment recognition system obtains the relative distances X and Y in the horizontal direction and the height direction between them by using a wide image processing region 61. Thereafter, as the vehicle approaches the characteristic object 50, the road environment recognition system narrows down the image processing region 61 to obtain the relative distances X and Y in the horizontal direction and the height direction. Accordingly, even if the positions of the characteristic object 50 in the horizontal direction and in the height direction are not stored in the map information database 12 as the characteristic object information, the road environment recognition system can recognize the characteristic object 50, while reducing a load on a computing process, without deteriorating recognition precision. In addition, the road environment recognition system sets the image processing region 61 into a sectoral shape. With this configuration, even if the detected vehicle position greatly deviates in the traveling direction relative to the characteristic object 50, the image processing region 61 can keep including the characteristic point 51 of the characteristic object 50 during the period from when the vehicle is on the far side at which the recognition of the characteristic object 50 is started till the vehicle is on the near side at which the recognition end condition of the characteristic object 50 is established. Thus, the precision of recognizing the characteristic object 50 can be enhanced. Upon the detection of the characteristic point 51, an abnormal value may be generated due to an influence of various disturbances. However, the road environment recognition system can eliminate such an abnormal value, since it uses the sectoral image processing region 61 which can keep including the characteristic point 51.

Here, the characteristic object detection unit outputs the relative distances X, Y, and Z, which are obtained in the process just before the recognition end condition of the characteristic object 50 is established, as the recognition result of the characteristic object 50. The case in which the relative distances X, Y, and Z are smaller means that the characteristic object 50 is recognized near the vehicle. Since the precision of the relative distances X, Y, and Z is enhanced, the characteristic object detection unit may output the recognition result of the characteristic object 50 together with a parameter indicating how high the precision is (e.g. degree of assurance). For example, in the case where the recognition result is output to the vehicle position detection unit in the electronic control unit 1, the vehicle position detection unit can enhance the precision of detecting the vehicle position based on this recognition result. For example, the vehicle position detection unit obtains the relative distance Z in the traveling direction between the vehicle and the characteristic object 50 based on the vehicle position information and the position information of the characteristic object 50 in the map information database 12, followed by comparison between the relative distance Z based on the vehicle position information and the relative distance Z in the recognition result of the characteristic object 50. When a deviation occurs between these relative distances Z, the vehicle position detection unit corrects the vehicle position based on the difference between them. Thus, the precision of detecting the vehicle position by the vehicle position detection unit is enhanced in this vehicle.

### [First Modification]

The image processing region 61 obtained in step ST4 has an area wider than the area of the image processing region 61 calculated in the subsequent step ST9. Accordingly, when these regions are compared, the load on the computing process upon the template matching for the image processing region 61 in step ST4 becomes higher than that for the image processing region 61 in step ST9. However, when the image processing region 61 in step ST4 is used, the vehicle and the characteristic object 50 are greatly apart from each other. Therefore, the motion of the characteristic point 51 on the captured image is small when the vehicle makes only a little movement. Accordingly, the motion of the characteristic point 51 is difficult to be confirmed in that case. Therefore, even when the shift of the characteristic point 51 enabling the calculation of the relative distances X, Y, and Z is generated, the shift might be unrecognizable.

In view of this, in the present modification, the frame rate of the image processing region 61 for the template matching using the image processing region 61 in step ST4 is reduced to make it easier to confirm the motion of the characteristic point 51 in the captured image. This configuration also contributes to the reduction in the load on the computing process during the template matching.

### [Second Modification]

In the road environment recognition system in the above embodiment and the first modification, the image processing region 61 is decreased by decreasing the predetermined angle (center angle) of the sectoral image processing region 61 in step ST9 as the vehicle approaches the characteristic object 50. However, the characteristic point 51 of the characteristic object 50 becomes away from the central part of the captured image as the vehicle approaches the characteristic object 50. Therefore, even if the region closer to the central part than the characteristic object 50 is excluded from the image processing region 61, any adverse influence is not exerted on the detection of the characteristic point 51 of the characteristic object 50. Accordingly, the image processing region calculation unit in the present modification is configured to decrease the image processing region 61 by excluding at least the region closer to the central part from the characteristic object 50 than the image processing region 61, as illustrated in FIG. 13. With this, the road environment recognition system according to the present modification can further reduce a load on a computing process.

### [Third Modification]

In the present modification, the image processing region 61 in step ST4 is replaced by an image processing region 62 described below in the road environment recognition system in the above embodiment and the first and second modifications. When the vehicle and the characteristic object 50 are far apart from each other, the characteristic object 50 is present at or around the central part of the captured image, as described above. In view of this, the execution of the template matching at the location apart from the central part or the vicinity of the central part in the image processing region 61 in step ST4 can be an unnecessary computing process. Therefore, it is desirable that the region apart from the central part or from the vicinity of the central part is excluded from the image processing region determined in step ST4. When the vehicle and the characteristic object 50 are far apart from each other, the execution of the template matching at or around the central part in a wide range is desirable for enhancing precision of recognizing the characteristic object 50 if the relative distances X and Y in the horizontal direction and the height direction of the characteristic object 50 relative to the vehicle cannot be obtained from the characteristic object information or the like.

In view of this, in step ST4 in the present modification, the rectangular image processing region 62 is calculated such that the region at or around the central part is set wider, as well as the region apart from the central part or from the vicinity of the central part is excluded. With this, the road environment recognition system according to the present modification can further reduce a load on a computing process and enhance the precision of recognizing the characteristic object 50. Note that the rectangular image processing region 62 has sides, each of which is parallel to each of four sides of the captured image.

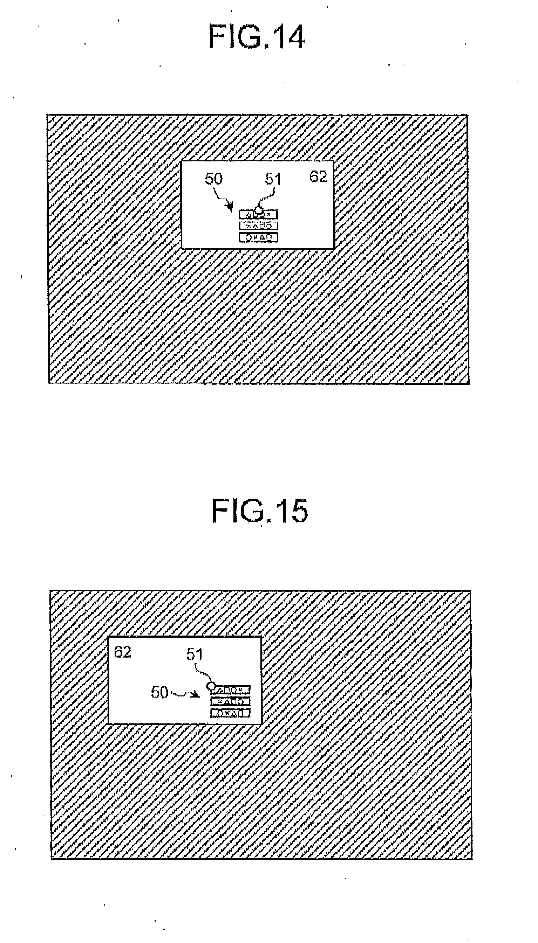

Specifically, when the position of the characteristic object 50 relative to the width direction of the road is above the road, the region above the central part or above the vicinity of the central part in the captured image is an unnecessary region for the template matching. Therefore, in such a case, a rectangular image processing region 62 illustrated in FIG. 14 is set. This region includes the shifting direction of the characteristic point 51 upward from the central part or the vicinity of the central part, and in the region, the central part or the vicinity of the central part is set wider with the shifting direction being defined as a center. In this case, when the vehicle approaches the characteristic object 50, the sectoral image processing region 61 in FIG. 3, for example, is obtained in step ST9.

When the position of the characteristic object 50 relative to the width direction of the road is on the left side of the road, the corner on the more left obliquely-upward side than the central part or from the vicinity of the central part in the captured image is an unnecessary region for the template matching. Therefore, in such case, a rectangular image processing region 62 illustrated in FIG. 15 is set. This region includes the shifting direction of the characteristic point 51 in the left obliquely-upward direction from the central part or from the vicinity of the central part, and in the region, the central part or the vicinity of the central part is set wider with the shifting direction being defined as a center. In this case, when the vehicle approaches the characteristic object 50, the sectoral image processing region 61 in FIG. 5, for example, is obtained in step ST9.

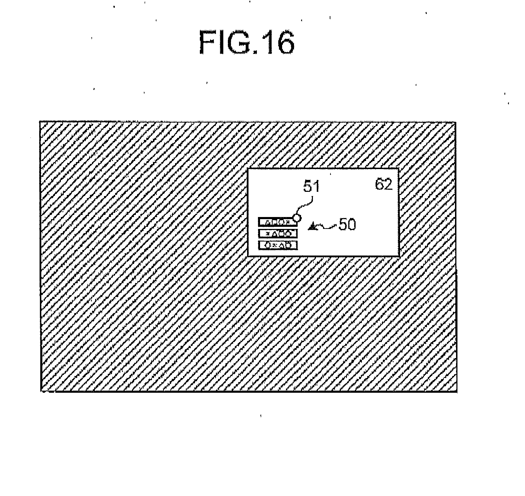

When the position of the characteristic object 50 relative to the width direction of the road is on the right side of the road, the corner on the more right obliquely-upward side than the central part or from the vicinity of the central part in the captured image is an unnecessary region for the template matching. Therefore, in such case, a rectangular image processing region 62 illustrated in FIG. 16 is set. This region includes the shifting direction of the characteristic point 51 in the right obliquely-upward direction from the central part or from the vicinity of the central part, and in the region, the central part or the vicinity of the central part is set wider with the shifting direction being defined as a center. In this case, when the vehicle approaches the characteristic object 50, the sectoral image processing region 61 in FIG. 7, for example, is obtained in step ST9.

### Reference Signs List

- 1: ELECTRONIC CONTROL UNIT
- 11: VEHICLE POSITION DETECTION DEVICE
- 12: MAP INFORMATION DATABASE
- 13: TEMPLATE DATABASE
- 21: IMAGING DEVICE
- 50: CHARACTERISTIC OBJECT
- 51: CHARACTERISTIC POINT
- 61, 62: IMAGE PROCESSING REGION

## Claims

1. A road environment recognition system comprising:
an imaging device configured to capture a view in a traveling direction of a vehicle;
an image processing region calculation unit configured to set a predetermined region in an image captured by the imaging device as an image processing region, the predetermined region including a central part and at least a part of a characteristic object present on a road, if any, in a traveling direction of the vehicle, and to decrease the image processing region as the vehicle approaches the characteristic object; and
a characteristic object detection unit configured to detect the characteristic object based on image information of the image processing region.

2. The road environment recognition system according to Claim 1, wherein the image processing region calculation unit is configured to set a region, which has a predetermined angle with the central part being defined as a center, as the image processing region.

3. The road environment recognition system according to Claim 1, wherein the image processing region calculation unit is configured to change the image processing region from at least a rectangular region to a region having a predetermined angle with the central part being defined as a center, as the vehicle approaches the characteristic object.

4. The road environment recognition system according to Claim 2, wherein the image processing region calculation unit is configured to exclude a region closer to the central part than the characteristic object in the image processing region from at least the image processing region, as the vehicle approaches the characteristic object.

5. The road environment recognition system according to Claim 2, 3, or 4, wherein the image processing region calculation unit is configured to decrease the predetermined angle of the image processing region, as the vehicle approaches the characteristic object.

6. The road environment recognition system according to Claim 2, 3, or 4, wherein the image processing region calculation unit is configured to decrease the predetermined angle of the image processing region, as the vehicle approaches the characteristic object, in such a manner that a line linking the position of the characteristic object relative to the current position of the vehicle to the position of the characteristic object relative to the vehicle approaching the characteristic object is included in the image processing region.

7. The road environment recognition system according to Claim 6, wherein the image processing region calculation unit is configured to change the line linking the characteristic objects according to a traveling lane of the vehicle and/or a traveling posture of the vehicle.

8. The road environment recognition system according to any one of Claims 2 to 6, wherein the image processing region calculation unit is configured to calculate the image processing region such that a characteristic point of the characteristic object is located on a synthetic vector of two vectors with the center of the predetermined angle being defined as a starting point.

9. The road environment recognition system according to Claim 8, wherein the image processing region calculation unit is configured to change the synthetic vector according to a traveling lane of the vehicle and/or a traveling posture of the vehicle.
